# EUROPEAN PATENT APPLICATION

(11) **EP 1 737 061 A2**
(43) Date of publication of application: **27.12.2006**
(21) Application number: 06115968.7
(22) Date of filing: 23.06.2006
(51) Int. Cl.: H01M 8/04, H01M 16/00

(54) **Fuel cell system and its operating method**

(30) Priority: 24.06.2005 KR 20050054826
(71) Applicant: Samsung SDI Co., Ltd., Suwon-si Gyeonggi-do (KR)
(72) Inventor: Jang, Won-Hyouk, Kyunggi-do (KR); Lee, Jong-Ki, Kyunggi-do (KR); Lee, Dong-Yun, Kyunggi-do (KR); Lee, Si-Hyun, Kyunggi-do (KR)
(74) Representative: Hengelhaupt, Jürgen

(57) **Abstract**

A fuel cell system for supplying electricity to a load system, the fuel cell system comprising a fuel cell unit generating electricity from air and fuel, a power supply unit supplying the load system with electricity, the power supply unit being charged with the electricity generated from the fuel cell unit in a selective manner, a control unit monitoring a charge condition of the power supply unit and operating the fuel cell unit in order to charge the power supply unit when the power supply unit is discharged to a predetermined level or lower and an output unit supplying the electricity output from the power supply unit to the load system.

## Description

### BACKGROUND OF THE INVENTION

### Field of the Invention

The present invention relates to a fuel cell system, and more particularly, to a fuel cell system and a method of driving the same for driving a load system using a fuel cell and an auxiliary power supply.

### Description of the Related Art

Conventionally, various kinds of primary or secondary batteries have been adopted in compact portable electronic devices. However, while recent compact electronic devices consume a huge amount of power as they have high performance, a conventional compact light-weight primary battery cannot suitably supply energy for them. Although the secondary battery advantageously has rechargeability, the amount of available energy that can be charged once in the secondary battery is smaller than that in the primary battery. Also, additional devices such as a power supply and an electric charger are needed to charge the secondary battery. Furthermore, a charge operation of the conventional secondary battery takes several hours or several tens of minutes. Therefore, the conventional secondary battery has some inconvenience of use.

Taking into consideration to a tendency that electronic devices become more compact and more light-weighted, and wireless network environments are widely commercialized so that people want to use handy and portable devices more and more, conventional primary or secondary batteries are not suitable to supply such devices with sufficient energy.

As a solution for this problem, a compact fuel cell is currently being highlighted. Conventionally, the fuel cell has been developed as a driving source of a vehicle or a large-sized electric generator. This is because the fuel cell has higher generation efficiency and produces cleaner wastes in comparison with a conventional generating system. In addition, the amount of energy that can be supplied per a unit weight or per a unit volume from the fuel cell can be several times or several tens of times in comparison with those of the convention primary and secondary batteries. Also, the fuel cell can be permanently used by just supplementing fuel, and has a shorter charge time in comparison with the secondary battery. Therefore, the fuel cell system has been focused as a driving source of a compact electronic device.

Generally, a fuel cell refers to an electrochemical device for directly converting chemical energy of fuel into electrical energy by virtue of an electrochemical reaction. For example, electrical energy can be extracted by reacting pure hydrogen or hydrogen obtained by reforming fuel such as petroleum or natural gas with oxygen in air, whereby heat and steam (water) can be obtained as by-products. Therefore, the fuel cell is similar to a battery because the electricity can be produced by the electrochemical reaction, while it is similar to an engine because fuel is injected to operate it. In other words, the fuel cell generates electricity by receiving external fuel and composing/decomposing it. Therefore, in the fuel cell system, electricity can be produced by only supplying fuel without a separate electrical charge operation. If a sufficient amount of fuel is supplied, the fuel cell can generate electricity for a sufficiently long time. Furthermore, the fueling time of the fuel cell is significantly shorter than an electrical charge time of a conventional rechargeable battery.

Nevertheless, since a current fuel cell technology cannot provide ability to safely produce a satisfactory level of electricity, the fuel cell cannot have been adopted as a power supply of portable compact electrical devices such as a laptop computer or a personal digital assistant.

Furthermore, it takes a predetermined time period for the fuel cell to safely supply electricity in an initial operation stage, so that a desired level of electricity cannot be obtained from the fuel cell in an initial operation stage. In order to overcome the aforementioned shortcomings, a hybrid type fuel cell system in which a secondary battery and a fuel cell system are alternately used has been developed.

However, the hybrid type fuel cell system also cannot overcome a technical shortcoming, i.e., production of unsafe electricity, of the conventional fuel cell system. Therefore, the hybrid type fuel cell system is also unsatisfactory to practically use it in portable compact electrical devices.

### SUMMARY OF THE INVENTION

An aspect of the present invention provides a fuel cell system and a method of driving the same for safely supplying electricity.

According to an aspect of the present invention, there is provided a fuel cell system for supplying electricity to a load system, the fuel cell system comprising a fuel cell unit generating electricity from air and fuel, a power supply unit supplying the load system with electricity, the power supply unit being charged with the electricity generated from the fuel cell unit in a selective manner, a control unit monitoring a charge condition of the power supply unit and operating the fuel cell unit in order to charge the power supply unit when the power supply unit is discharged to a predetermined level or lower and an output unit supplying the electricity output from the power supply unit to the load system.

The control unit may be operated to interrupt operation of the fuel cell unit when the power supply unit is charged to a predetermined level or higher.

The fuel cell system according to the present invention may further include an interface unit connected to the power supply unit to interconnect the power supply unit to an external power supply and charge the power supply unit.

According to an another aspect of the present invention, there is provided a method of driving a fuel cell system for supplying a load system with electrical power, the fuel cell system including a fuel cell unit and a power supply unit, the method comprising steps of: a) supplying the load system with electrical power from the power supply unit; b) monitoring a charge condition of the power supply unit to determine whether or not the power supply unit is discharged to a predetermine level or lower; and c) operating the fuel cell unit to generate electricity and charging the power supply unit with the generated electricity when it is determined that the power supply unit is discharged to a predetermined level or lower.

Preferably, the fuel cell unit may be turned off when the electrical power is supplied to the load system in the step a).

A discharge condition of the power supply unit may be monitored in real time if it is determined that the charge condition of the power supply unit is maintained in a predetermined level or higher as a result of the step b).

In addition, the method according to the present invention may further include a step of turning off the fuel cell unit when the power supply unit is charged to a predetermined level or higher through the step c).

### BRIEF DESCRIPTION OF THE DRAWINGS

The accompanying drawing, together with the specification, illustrate exemplary embodiments of the present invention, and, together with the description, serve to explain the principles of the present invention.

Fig. 1 is a block diagram illustrating a schematic construction of a fuel cell system according to an embodiment of the present invention.

Fig. 2 is a flowchart schematically illustrating a process of charging a power supply unit by a fuel cell unit according to an embodiment of the present invention.

### DETAILED DESCRIPTION

In the following detailed, certain exemplary embodiments of the present invention are shown and described, by way of illustration. As those skilled in the art would recognize, the described exemplary embodiments may be modified in various ways, all without departing from the sprit or scope of the present invention. Accordingly, the drawings and description are to be regarded as illustrative in nature, rather than restrictive.

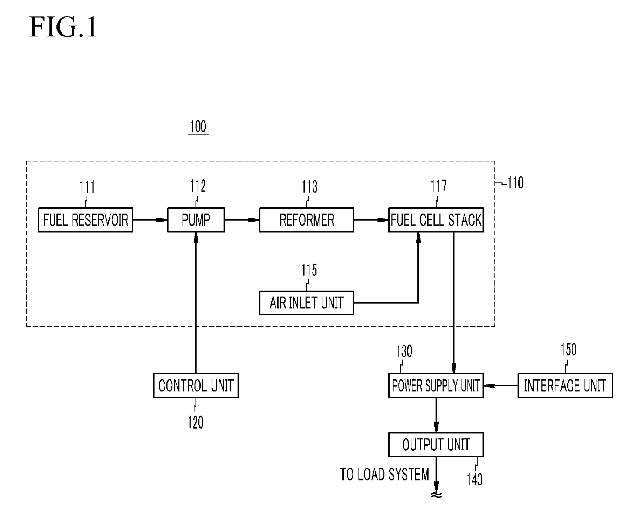

Fig. 1 is a block diagram illustrating a schematic construction of a fuel cell system according to an embodiment of the present invention.

A fuel cell system 100 according to an embodiment of the present invention includes a fuel cell unit 110, a control unit 120, a power supply unit 130, and an output unit 140.

The fuel cell unit 110 has a fuel reservoir 111, a pump 112, a reformer 113, an air inlet unit 115, and a fuel cell stack 117.

The fuel reservoir 111 is a tank for storing chemical fuel such as methanol or petroleum. The pump 112 pumps up the fuel stored in the fuel reservoir 111 and supplies it to the reformer 113. The air inlet unit 115 intakes external air and supplies it to the fuel cell stack 117 in order to promote the electrochemical reaction with the fuel supplied from the fuel cell reservoir 111. The reformer 113 reforms the fuel supplied from fuel reservoir 111 through the pump 112 to generate hydrogen. In the fuel cell stack 117, the hydrogen supplied from the reformer 113 and the air supplied from the air inlet unit 115 are electrochemically reacted to generate an electromotive force.

The control unit 120 is adapted to monitor an electrical charge condition of the power supply unit 130 and open the pump 112 in order to supply the fuel to the reformer 113 if the electrical charge condition satisfies a predetermined reference level (for example, if the power supply unit 130 is charged to 70% of its electrical charge capacity). Also, the control unit 120 is adapted to operate the fuel cell unit 110 and charge the power supply unit 130 with the electromotive force which is accordingly generated.

The power supply unit 130 supplies the load system (not shown in the drawing) with necessary electricity. The power supply unit 130 is charged in a selective manner when it is necessary to be charged. In other words, the power supply unit 130 may be charged by an external power supply or an internal fuel cell, as will be described below. Preferably, the power supply unit 130 may be constructed of a secondary battery. If the power supply unit 130 is constructed of a secondary battery, the fuel cell system according to an embodiment of the present invention further includes an interface unit 150 for connecting the secondary battery to an external power supply in order to charge the secondary battery.

In the embodiment, the power supply 130 may be formed as a plurality of packs with the secondary battery. Each pack connects electrically to the fuel cell stack 117 and when the fuel cell system 100 is operated, the packs may be worked that a pack discharges the electricity so that uses as main power while anther pack charges the electricity.

Meanwhile, the output unit 140 interconnects the power supply unit 130 with the load system, for example, a compact electronic device such as a laptop computer, in order to deliver the electricity charged in the power supply unit 130 to the load system.

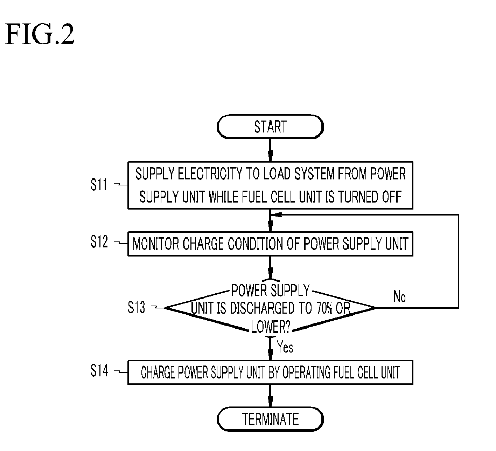

Hereinafter, a process of selectively charging the power supply unit 130 will be described in detail with reference to the accompanying drawings. Fig. 2 is a flowchart illustrating a process of charging the power supply unit.

In an initial stage for operating the load system, the control unit 120 is adapted to close the pump 113 in order to interrupt the fuel supplied to the reformer 117 and turn off the fuel cell unit 110. Therefore, in an initial operation stage, the load system is operated by using the electrical power supplied from the power supply unit 130 (S11).

When the load system is operated using the electricity supplied from the power supply unit 130, the control unit 120 monitors the operation condition of the power supply unit 130 in real time. Meanwhile, the electricity is supplied to the load system from the power supply unit 130.

In addition, the control unit 120 monitors an electrical charge condition of the power supply unit 130 (S12) and determines in real time whether or not the electrical charge condition of the power supply unit 130 satisfies a predetermined reference level (e.g., whether or not discharged to 70% or higher of the electrical charge capacity of the power supply unit 130) (S13).

As a result, if it is determined that the charge condition of the power supply unit 130 satisfies a predetermined level, a process returns to the aforementioned step S12 to continuously monitor the electrical charge condition of the power supply unit 130.

On the contrary, if it is determined that the electrical charge condition of the power supply unit 130 does not satisfy a predetermined reference level, the control unit 120 turns on the pump 112 to supply the fuel to the reformer 113 and start to operate the fuel cell unit 110. Then, the electricity generated from the fuel cell unit 110 in this process is supplied to the power supply unit 130 in order to charge the power supply unit 130 (S14).

When the power supply unit 130 is charged to a predetermined reference level (e.g., charged to 90% or higher of the electrical charge capacity of the power supply unit 130) through such a charge operation, the control unit 120 turns off the pump 112 to stop the operation of the fuel cell unit 110.

As a result, the power supply unit 130 can supply the load system with electricity while the power supply unit 130 is charged using the electricity supplied from the fuel cell unit 110. Therefore, it is possible to safely supply the load system with the electricity.

Alternatively, the power supply unit 130 may be directly charged using an external power supply in addition to the aforementioned process. In other words, the power supply unit 130 may receive electrical power from an external power supply through the interface unit 150 connected to the power supply unit 130 and may be charged by the external power supply.

As described above, the fuel cell system according to an embodiment of the present invention can be selectively charged with the electricity generated from the fuel cell unit 110 or with the electricity directly received from the external power supply. Therefore, it is possible to safely supply the load system with electricity. In addition, even when the load system is used in an environment where the external power supply cannot be provided, the fuel cell system can be continuously charged with the electricity generated from the fuel cell in order to prevent the power supply unit from being fully discharged.

According to the present invention, it is possible to safely supply a load system with electrical power by using a hybrid type fuel cell system. In the fuel cell system according to the present invention, since a secondary battery is used to supply the electrical power, it is possible to safely supply the electrical power. Internally, since the secondary battery is charged with the electricity generated from the fuel cell when discharged to a predetermined level or lower, the secondary battery is not fully discharged. Furthermore, since the secondary battery can be directly charged using an external power supply, it is possible to provide user's convenience.

## Claims

1. A fuel cell system for supplying electricity to a load system, the fuel cell system comprising:
a fuel cell unit generating electricity from air and fuel;
a power supply unit supplying the load system with electricity, the power supply unit being charged with the electricity generated from the fuel cell unit in a selective manner;
a control unit monitoring a charge condition of the power supply unit and operating the fuel cell unit in order to charge the power supply unit when the power supply unit is discharged to a predetermined level or lower; and
an output unit supplying the electricity output from the power supply unit to the load system.

2. The fuel cell system of Claim 1, wherein the control unit is operated to interrupt operation of the fuel cell unit when the power supply unit is charged to a predetermined level or higher.

3. The fuel cell system of Claim 1, wherein the power supply unit includes a secondary battery.

4. The fuel cell system of Claim 1, further comprising an interface unit connected to the power supply unit to interconnect the power supply unit to an external power supply and charge the power supply unit.

5. A method of driving a fuel cell system for supplying a load system with electricity, the fuel cell system including a fuel cell unit and a power supply unit, the method comprising:
a) supplying the load system with electricity from the power supply unit;
b) monitoring a charge condition of the power supply unit to determine whether or not the power supply unit is discharged to a predetermine level or lower; and
c) operating the fuel cell unit to generate electricity and charging the power supply unit with the generated electricity when it is determined that the power supply unit is discharged to a predetermined level or lower.

6. The method of Claim 5, wherein the fuel cell unit is turned off when the electricity is supplied to the load system in the step a).

7. The method of Claim 5, wherein a discharge condition of the power supply unit is monitored in real time if it is determined that the charge condition of the power supply unit is maintained in a predetermined level or higher as a result of the step b).

8. The method of Claim 5, further comprising turning off the fuel cell unit when the power supply unit is charged to a predetermined level or higher through the step c).
